# EUROPEAN PATENT SPECIFICATION

(11) **EP 2 009 530 B1**
(45) Date of publication and mention of the grant of the patent: **25.07.2012**
(21) Application number: 08156870.1
(22) Date of filing: 23.05.2008
(51) Int. Cl.: G05B 19/408

(54) **Numerical controller having function of resuming look-ahead of block**
Numerische Steuerung mit Funktion zur Wiederaufnahme von Blockvorschau
Contrôleur numérique doté d'une fonction de reprise de lecture anticipée de bloc

(30) Priority: 24.05.2007 JP 2007137888
(43) Date of publication of application: 31.12.2008
(73) Proprietor: FANUC CORPORATION, Oshino-mura Minamitsuru-gun Yamanashi 401-0597 (JP)
(72) Inventor: Haga, Makoto, Yamanashi 401-0597 (JP); Hosokawa, Masahiko, Yamanashi 401-0597 (JP)
(74) Representative: Ward, James Norman

(56) References cited:
- EP-A1- 1 710 644
- US-A1- 2005 113 958
- Siemens Corporation: "SINUMERIK 840D/840Di/810D Programming Guide Advanced 11/2002 Edition" 1 November 2002 (2002-11-01), XP002605124 Retrieved from the Internet: URL:http://www.flintmachine.com/pdfs/fadal -manuals/siemens-manual/Advanced_Programmi ng.pdf [retrieved on 2010-10-13]
- HONG-TZONG YAU ET AL: "Development and implementation for real-time lookahead interpolator by using Bezier curve to fit CNC continuous short blocks" MECHATRONICS, 2005. ICM '05. IEEE INTERNATIONAL CONFERENCE ON TAIPEI, TAIWAN, 10 July 2005 (2005-07-10), - 12 July 2005 (2005-07-12) pages 78-83, XP010847956 PISCATAWAY, NJ, USA,IEEE, US DOI: 10.1109/ICMECH.2005.1529231 ISBN: 978-0-7803-8998-4
- YAU ET AL: "Fast Bezier interpolator with real-time lookahead function for high-accuracy machining" INTERNATIONAL JOURNAL OF MACHINE TOOL DESIGN AND RESEARCH, vol. 47, no. 10, 13 April 2007 (2007-04-13), pages 1518-1529, XP022026170 PERGAMON PRESS, OXFORD, GB ISSN: 0020-7357 DOI: 10.1016/J.IJMACHTOOLS.2006.11.010

## Description

### BACKGROUND OF THE INVENTION

### 1. Field of the Invention

The present invention relates to a numerical controller for controlling a machine tool. In particular, the invention relates to a numerical controller in which command blocks are read from a program in advance to generate executable data, the execution data are temporarily stored in a look-ahead buffer, and interpolation processing is performed based on the execution data, and more particularly, to a numerical controller capable of shortening the cycle time of look-ahead stop control.

### 2. Description of the Related Art

In performing look-ahead control in a numerical controller, a block for, for example, a system variable operation in a later stage of a sequence of a machining program is directly executed without being stored in a look-ahead buffer, so that it may possibly influence processing of execution data that are analyzed and temporarily stored in the look-ahead buffer. Look-ahead stop control is carried out in such a case.

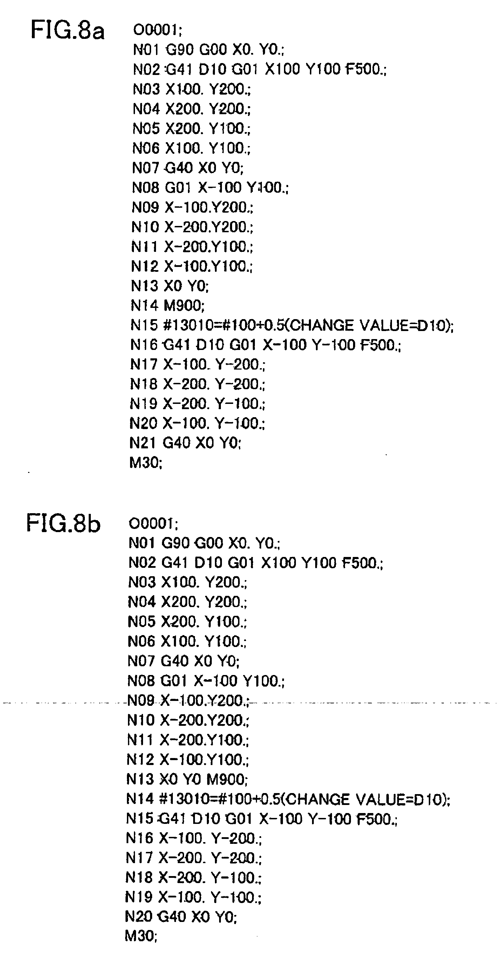

In the conventional look-ahead stop control in the numerical controller, a command for the control is inserted as one block in a machining program, and look-ahead processing for the program is stopped by the inserted block (FIG. 8a). In the program example shown in FIG. 8a, a block N14 of a look-ahead stop code is inserted in order to prevent a block N15 from being read in advance or looked ahead. There is also a look-ahead stop code that can be commanded together with a block of the machining program by inserting the code for the look-ahead stop control into the program. However, the look-ahead is stopped after the entire processing of the block including the look-ahead stop code is completed (FIG. 8b). In the program example shown in FIG. 8b so as not to read the block N14 in advance, an M-code, which is an auxiliary function, is inserted as a look-ahead stop code into a block N13. Further, there is a known technique in which look-ahead is resumed when a variable is settled in a robot control method (see JP 05-218445A).

Document "SINUMERIK 840D/840Di/810D Programming Guide Advanced 11/2002 Edition" from Siemens Corporation discloses a programming guide for a NC system in which look-ahead control is performed by using a pre-processing memory in which analyzed blocks are stored prior to program execution. The programming language disclosed in this document contains a function (STOPRE) to stop look-ahead. When said function defines the read block, the following block is not pre-processed until all previously analyzed and stored blocks have been fully executed.

There is a problem that if a look-ahead stop program is inserted for one block, a processing time for the block is inevitably added to the processing time of the machining program, so that the machining time is extended. Since the look-ahead stop code that can be issued together with the machining program is an auxiliary function, moreover, a signal operation for a programmable controller is required at the end of execution of the block. Thus, the execution is retarded, so that the machining time is further extended.

### SUMMARY OF THE INVENTION

The present invention provides a numerical controller capable of performing look-ahead control by suspending analysis of a read block of a machining program and resuming the analysis of the read block at a suspended stage when execution of a block immediately preceding the read block is completed, to shorten the cycle time of the look-ahead control.

A numerical controller of the present invention carries out numerical control by performing look-ahead of successively reading and analyzing blocks of a machining program to obtain execution data and storing the execution data in a buffer in advance, and performing execution of the stored execution data. According to an aspect of the present invention, the numerical controller comprises: code determining means that determines whether or not a read block contains a suspend code to suspend analyzing of the read block so that the look-ahead is stopped; suspending means that suspends analyzing of the read block which is determined to contain the suspend code by the code determining means; execution completion determining means that determines whether or not execution of the stored execution data of a block immediately preceding the suspended block is completed; and resuming means that resumes the analyzing of the suspended block when the execution of the stored execution data of the immediately preceding block is determined to be completed by the execution completion determining means.

In this case, the numerical controller may further comprise means for registering the suspend code to stop the look-ahead using a parameter.

According to another aspect of the invention, the numerical controller comprises: code determining means that determines whether or not a read block contains a code of a macro variable operation for which analyzing of the read block is to be suspended so that the look-ahead is stopped; suspending means that suspends analyzing of the read block which is determined to contain the code of the macro variable operation for which the analyzing of the read block is to be suspended by the code determining means; execution completion determining means that determines whether or not execution of the stored execution data of a block immediately preceding the suspended block is completed; and resuming means that resumes the analyzing of the suspended block when the execution of the stored execution data of the immediately preceding block is determined to be completed by the execution completion determining means.

In this case, the numerical controller may further comprise means for designating a range of macro variables for determination of the code of the macro variable operation for which analyzing of the read block is to be suspended, using a parameter.

Further, the numerical controller may comprise means for designating a stage of the macro variable operation for which analyzing of the read block is to be suspended, using a parameter.

According to still another aspect of the invention, the numerical controller comprises: code determining means that determines whether or not a read block contains a look-ahead stop code to stop the look-ahead; code type determining means that determines whether or not the look-ahead stop code determined by the code determining means is a code to suspend analyzing of the read block; execution completion determining means that determines whether or not execution of the stored execution data of a block immediately preceding the suspended block is completed; and suspending/continuing means that suspends analyzing of the read block containing the code to suspend analyzing of the read block and resumes the analyzing of the suspended block to obtain the execution data, or alternatively continues the analyzing of the read block to obtain the execution data, in accordance with results of the determination by the code type discrimination means and the determination of the execution completion determining means.

In this case, the numerical controller may further comprise means for registering one or more look-ahead stop codes using one or more parameters.

By including the code to suspend analysis of a read block to stop the look-ahead in a machining program command, the cycle time for the machining program can be made shorter than in the case of a conventional method in which a block to stop the look-ahead is inserted. Moreover, there is a problem that the look-ahead is stopped after the processing of the block including the look-ahead code is completed, in the conventional look-ahead stop code inserted in the existing block in the machining program. However, this problem can be eliminated by the suspension of the machining program analysis. Since the analysis processing of the machining program is suspended and resumed from the suspended stage, moreover, it is less wasteful than in the conventional look-ahead control method, so that the cycle time can be further shortened.

### BRIEF DESCRIPTION OF THE DRAWINGS

FIG. 1 is a schematic diagram of a numerical controller having a look-ahead function to control a machine tool according to one embodiment of the present invention;
FIG. 2 is a flowchart showing an algorithm such that an analysis according to the embodiment is suspended and saved in a look-ahead buffer;
FIG. 3 is a flowchart showing an algorithm such that the analysis according to the embodiment is suspended and not saved in the look-ahead buffer;
FIG. 4 is a flowchart showing an algorithm involving two types of look-ahead stop codes according to the embodiment;
FIG. 5 is a flowchart showing processing such that execution data are read from the look-ahead buffer and executed;
FIG. 6 shows a program example for the case where G900 is used as a code intended to stop look-ahead;
FIG. 7 shows a program example for the case where a code that stops look-ahead is used as a code for macro variable operation; and
FIGS. 8a and 8b show program examples for the case where G900 is used as a code intended to stop look-ahead.

### DETAILED DESCRIPTION

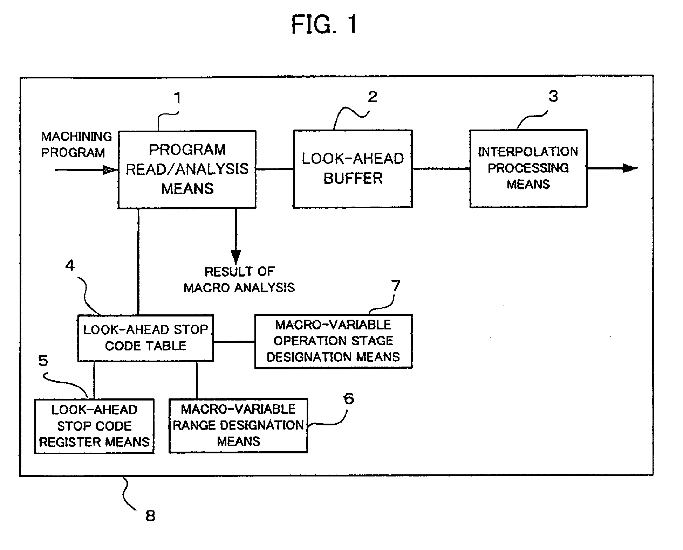

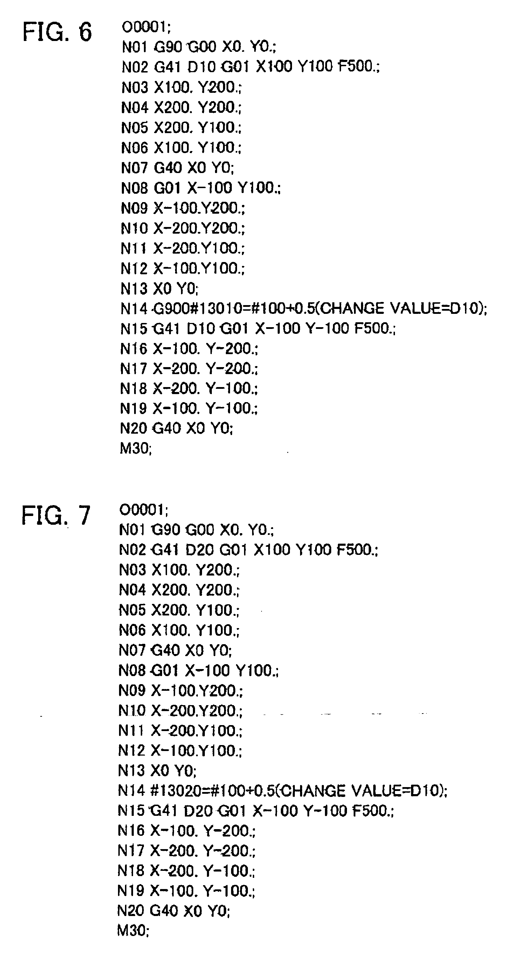

A numerical controller 8 according to an embodiment of the present invention shown in FIG. 1 is provided with a look-ahead stop code table 4. The look-ahead stop code table 4 is loaded with codes of a type that stops look-ahead and codes of a type that suspends block analysis to stop look-ahead. In some cases, macro variables may be used as codes to be stored in the look-ahead stop code table 4. Referring to FIG. 1, program read/analysis means 1 successively reads and analyzes one or more blocks advancing the present block as being executed, and loads the result of the analysis into a look-ahead buffer 2. The look-ahead buffer 2 is loaded with several pieces of information, such as modal information on for each block, movement of each axis, commanded spindle speed, feed speed, etc. The program read/analysis means 1 shown in FIG. 1 reads the blocks one by one from a machining program and analyzes the blocks. When the look-ahead stop code registered in the look-ahead stop code table 4 appears, look-ahead of the machining program is stopped. The look-ahead stop codes include registered codes and macro variables, such as G900 of N14 in the machining program example of FIG. 6 and #13020 of N14 in the machining program example of FIG. 7.

The block analysis in the numerical controller 8 implies conversion of the blocks as source codes into object codes, that is, execution data that can be recognized by a computer. This conversion involves seven types of processes; lexical analysis (1), macro analysis (2), macro execution (3), syntactic analysis (4), semantic analysis (5), object code generation (6), and optimization (7). The lexical analysis (1) is a process for dividing alphabetic symbols from numeric symbols. The macro analysis (2) indicates that a macro analysis is performed when the result of the lexical analysis involves special symbols of macro variables. Variable numbers and macro syntaxes are analyzed, and the analysis is stopped if any variable operation registered in the look-ahead stop code table 4 is performed. The macro execution is execution of analyzed macros. Depending on the macro program, macro regions are rewritten according to the result of the lexical analysis. For example, GOOX#100; is information to the effect that 350.0 is input to the X-address of result data of the lexical analysis if the value of #100 is 350.0 when this command is executed. The syntactic analysis (4) serves only to determine the numerical value of the G-command. The semantic analysis (5) can specify the function by the numerical value of the G-command so that processing can be executed for each function. The object code generation (6) implies object-coding of the result of the semantic analysis. In the present embodiment of the invention, execution data are generated by the aforesaid processes for the blocks that are looked ahead in succession. If no look-ahead processing is performed based on macro variable operation, the conversion processes for the macro analysis (2) and the macro execution (3) are not performed.

If any code of the type that suspends block analysis is present in the block, the numerical controller 8 performs processing for suspending the block analysis in a predetermined one of the aforesaid processes. The numerical controller 8 is provided with look-ahead stop code register means 5 and macro variable range designation means 6. One or more look-ahead stop codes can be registered in the look-ahead stop code register means 5 by parameters. The macro variable range designation means 6 can designate by parameters the range of macro variables that are used to determine the suspension of the block analysis so that the block analysis can be suspended to stop the look-ahead processing when a variable within the range of # 10000 to # 11000 is operated. As examples of variable operations, moreover, operations for (1) reading the value of the variable, (2) changing the content of the variable, etc. can also be designated by parameters. For these designations, the numerical controller 8 may be provided with macro variable operation stage designation means 7 which can specify that the look-ahead of only the operation (2) be stopped without allowing the look-ahead of the operation (1) to be stopped. It is necessary only that the numerical controller 8 be provided with only one of these means 5, 6 and 7.

There is a method for further designating the operating method by designating, for example, the range of variable numbers as specific examples of parameters, which include, for example:

| | |
|---|---|
| Parameter 15010 = | 13000, |
| Parameter 15011 = | 13100 (or number, e.g., 100, to be input), |
| Parameter 15012 = | 0: For read and write operations, |
| | 1: For read operation only, |
| | 2: For write operation only. |

Designation methods based on functions include, for example:

| | | |
|---|---|---|
| Parameter 15000# | 0 = 1: | To stop look-ahead when a variable of an offset function is read and written. |
| Parameter 15000# | 1 = 1: | To stop look-ahead only when the variable of the offset function is read. |
| Parameter 15000# | 2 = 1: | To stop look-ahead only when the variable of the offset function is written. |

Thus, the parameters are set with significance, and some sets of these parameters are registered.

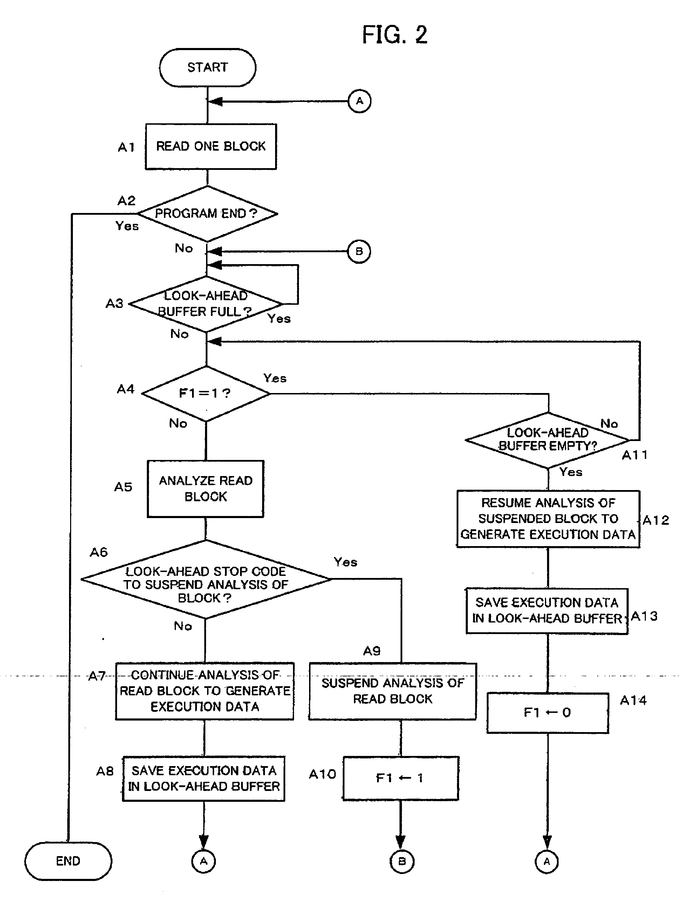

FIG. 2 is a flowchart showing an algorithm of look-ahead processing using a code that is intended for the suspension of the block analysis that is performed by a processor of the numerical controller of the present embodiment and for look-ahead stop. The code that is intended for look-ahead stop of a type that involves the suspension of the block analysis is set like G900 that is used in the machining program example of FIG. 6. First, one block is read from the machining program (Step A1). It is determined whether or not the read block is a program end (Step A2). Whether or not the read block is the program end can be determined by recognizing a sequence number and a code indicative of the program end, for example. In the machining program example shown in FIG. 6, the program end can be identified by recognizing M30, which is an auxiliary function indicative of the program end. If the program end is identified, the processing of the machining program terminates.

In Step A3, it is determined whether or not the look-ahead buffer that is provided for the numerical controller is full. If the look-ahead buffer is full, it is waited until the buffer ceases to be full (Step A3). Whether or not the look-ahead buffer is full can be determined by, for example, recognizing a pointer that is indicative of a position where the look-ahead buffer is stored with the block execution data. If it is concluded that the look-ahead buffer is not full, it is determined whether or not a flag F indicative of look-ahead stop is set to 1 (Step A4). If the flag is not 1 (that is, if the look-ahead is not stopped), the read block is analyzed (Step A5). The analysis in Step A5 includes the lexical analysis and the syntactic analysis. It is determined whether or not any look-ahead stop code of the type that suspends the block analysis is present in the block information that is analyzed in Step A5 (Step A6). If it is concluded in Step A6 that there is no look-ahead stop code of the type that suspends the block analysis, the analysis of the read block is continued to generate execution data (Step A7). The analysis in Step A7 is continued starting with the semantic analysis. The generated execution data is saved in the look-ahead buffer (Step A8). Then, the procedure returns to the beginning to read the next block.

If it is concluded in Step A6 that there is a look-ahead stop code of the type that suspends the block analysis, the analysis of the block that contains this code is suspended (Step A9). Then, the flag is set to 1 for look-ahead stop (Step A10). Since the block analysis is suspended, the procedure returns to a stage between Step A2 in which the program end is identified and Step A3 in which whether or not the look-ahead buffer is full is determined, lest the next block be read.

If it is concluded in Step A4 that the flag is 1, that is, the look-ahead is stopped, it is then determined whether or not the look-ahead buffer is empty, i.e. the execution of the execution data of a block immediately preceding the suspended block which has been stored in the look-ahead buffer is completed or not (Step A 11). If it is determined in Step A11 that the look-ahead buffer is not empty, it is waited until the buffer is emptied. If it is concluded that the look-ahead buffer is empty, the analysis processing for the block of which the analysis is suspended in Step A9 is resumed and continued to generate execution data (Step A12). The analysis in Step A12 is continued starting with the semantic analysis. The generated execution data is saved in the look-ahead buffer (Step A13). Since the suspended block analysis processing is resumed and continued, the flag F is reset to 0 to cancel the look-ahead stop state, in order to enable the analysis of the next block (Step A14). Then, the procedure returns to the beginning to read the next block.

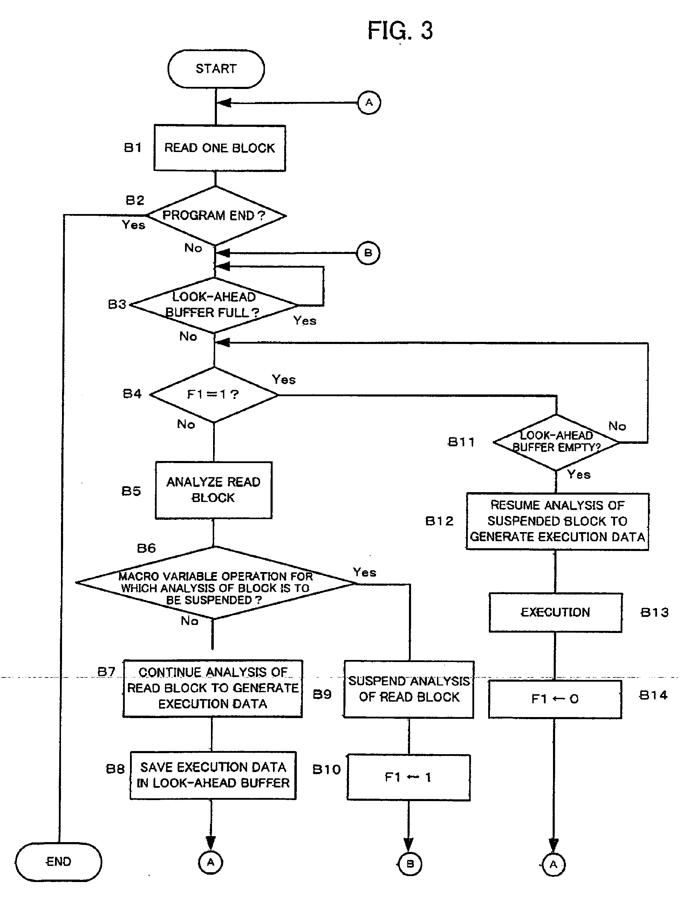

FIG. 3 is a flowchart showing an algorithm of look-ahead processing using macro variable operation as a discrimination code that is intended for the suspension of the block analysis that is performed by the processor of the numerical controller of the present embodiment and for look-ahead stop. First, one block is read from the machining program (Step B1). It is determined whether or not the read block is a program end (Step B2). Whether or not the read block is the program end can be determined by recognizing a sequence number and a code indicative of the program end, for example. In the machining program example shown in FIG. 6, the program end can be identified by recognizing M30, which is an auxiliary function indicative of the program end. If the program end is identified, the processing of the machining program terminates.

In Step B3, it is determined whether or not the look-ahead buffer that is provided for the numerical controller is full. If the look-ahead buffer is full, it is waited until the buffer ceases to be full (Step B3). Whether or not the look-ahead buffer is full can be determined by, for example, recognizing the pointer that is indicative of the position where the look-ahead buffer is stored with the block execution data. If it is concluded that the look-ahead buffer is not full, it is determined whether or not the flag F indicative of look-ahead stop is set to 1 (Step B4). If the flag is not 1 (that is, if the look-ahead is not stopped), the read block is analyzed (Step B5). The block analysis in Step B5 includes the lexical analysis and the macro analysis. It is determined whether or not any macro variable operation of the type for which the block analysis is to be suspended is present in the block information analyzed in Step B5 (Step B6). If it is concluded in Step B6 that there is no macro variable operation of the aforesaid type, the analysis of the read block is continued to generate execution data (Step B7). The analysis in Step B7 is continued starting with the macro execution. The generated execution data is saved in the look-ahead buffer (Step B8). Then, the procedure returns to the beginning to read the next block.

If it is concluded in Step A6 that there is a macro variable operation of the type to suspend the block analysis, the analysis of the block that contains the macro variable operation is suspended (Step B9). Then, the flag is set to 1 for look-ahead stop (Step B10). Since the block analysis is suspended, the procedure returns to a stage between Step B2 in which the program end is identified and Step B3 in which whether or not the look-ahead buffer is full is determined, lest the next block be read.

If it is concluded in Step B4 that the flag is 1, that is, the look-ahead is stopped, it is then determined whether or not the look-ahead buffer is empty (Step B11). If it is concluded in Step B11 that the look-ahead buffer is not empty, it is waited until the buffer is emptied. If it is concluded that the look-ahead buffer is empty, the analysis processing for the block of which the analysis is suspended in Step B9 is resumed and continued to generate execution data (Step B 12). The analysis in Step B 12 is continued starting with the macro execution, and execution processing is performed (Step B 13). Since the suspended block analysis processing is resumed and continued, the flag F is reset to 0 to cancel the look-ahead stop state, thereby permitting look-ahead, in order to enable the analysis of the next block (Step B 14). Then, the procedure returns to the beginning to read the next block.

The flowcharts of FIGS. 2 and 3 are different in Steps A 13 and B 13. While the obtained execution data is saved in the look-ahead buffer in Step A13, the execution processing is directly performed without saving the execution data in the look-ahead buffer in Step B13.

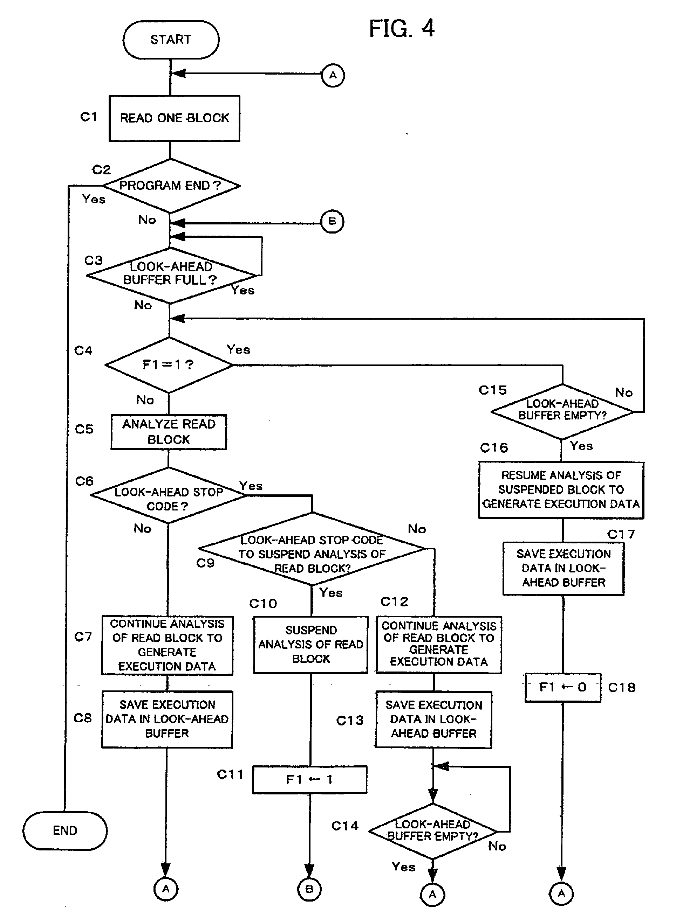

FIG. 4 is a flowchart showing an algorithm of look-ahead processing using two types of codes (a code for suspending analysis of a pre-read block and a code for continuing analysis processing to generate execution data) stored in the look-ahead stop code table 4 of FIG. 1. First, one block is read from the machining program (Step C1). It is determined whether or not the read block is a program end (Step C2). Whether or not the read block is the program end can be determined by recognizing a sequence number and a code indicative of the program end, for example. In the machining program example shown in FIG. 6, the program end can be identified by recognizing M30, which is an auxiliary function indicative of the program end. If the program end is identified, the processing of the machining program terminates.

In Step C3, it is determined whether or not the look-ahead buffer that is provided for the numerical controller is full. If the look-ahead buffer is full, it is waited until the buffer ceases to be full (Step C3). Whether or not the look-ahead buffer is full can be determined by, for example, recognizing a pointer that is indicative of a position where the look-ahead buffer is stored with the block execution data. If it is concluded that the look-ahead buffer is not full, it is determined whether or not a flag F indicative of look-ahead stop is set to 1 (Step C4). If the flag is not 1 (that is, if the look-ahead is not stopped), the read block is analyzed (Step C5). The analysis in Step C5 includes the lexical analysis and the syntactic analysis. It is determined whether or not any look-ahead stop code of the type that suspends the block analysis is present in the block information analyzed in Step C5 (Step C6). If it is concluded in Step C6 that there is no look-ahead stop code, the analysis of the read block is continued to generate execution data (Step C7). The generated execution data is saved in the look-ahead buffer (Step C8). Then, the procedure returns to the beginning to read the next block.

If it is concluded in Step C6 that there is a look-ahead stop code, it is determined whether or not the look-ahead stop code is of the type to suspend the block analysis (Step C9). The look-ahead code G900 is shown as being of the type that suspends the block analysis in the machining program example of FIG 6. Further, M900 is shown in FIGS. 8a and 8b as a code for analysis processing for the read block and generation of execution data. If it is concluded in Step C9 that there is a look-ahead stop code of the type that suspends the block analysis, the analysis of the block that contains this code is suspended (Step C10), and the flag is set to 1 for look-ahead stop (Step C11). Since the block analysis is suspended, the procedure returns to a stage between Step C2 in which the program end is identified and Step C3 in which whether or not the look-ahead buffer is full is determined, lest the next block be read.

If it is concluded in Step C9 that the look-ahead suspension code, like M900, is not of the type that suspends the block analysis, the analysis of the block that contains the look-ahead stop code of this type is continued to generate execution data (Step C 12). The obtained execution data is saved in the look-ahead buffer (Step C 13). Then, it is waited until the buffer is emptied (Step C14), and the procedure returns to the beginning.

If it is concluded in Step C4 that the flag is 1, that is, the look-ahead is stopped, it is then determined whether or not the look-ahead buffer is empty (Step C15). If it is concluded in Step C15 that the look-ahead buffer is not empty, it is waited until the buffer is emptied. If it is concluded that the look-ahead buffer is empty, the analysis processing for the block of which the analysis is suspended in Step C10 is resumed and continued to generate execution data (Step C16). The generated execution data is saved in the look-ahead buffer (Step C17). Since the suspended block analysis processing is resumed and continued, the flag F is reset to 0 to cancel the look-ahead stop state, in order to enable the analysis of the next block (Step C 18). Then, the procedure returns to the beginning to read the next block.

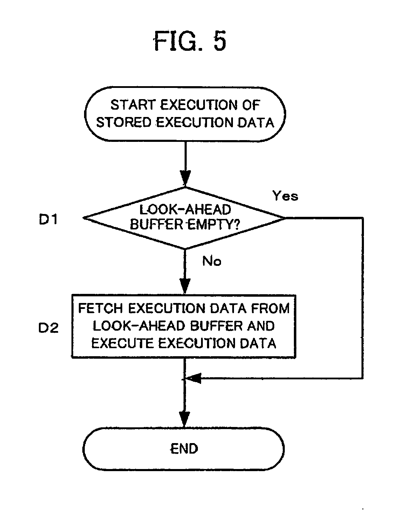

FIG. 5 is a flowchart showing an algorithm of processing such that execution data are read from the look-ahead buffer and executed. It is determined whether or not the look-ahead buffer is empty. If the look-ahead buffer is not empty, the execution data are fetched from the look-ahead buffer and executed. The execution data stored in the look-ahead buffer are fetched block by block or in blocks at a time and executed.

FIG. 6 shows a machining program example for the case where G900 is used as a code that is intended to stop look-ahead. For example, "G90 G00 X0. Y0.;" is the starting block of the machining program, and "G41 D10 G01 X100 Y100 F500.;" is the next block. D10 is a tool diameter correction value. "M30;" is the last block of the machining program. The machining program shown in FIG. 6 is composed of 21 blocks. A variable #13010 is a macro variable that can change a tenth offset value for tool diameter correction if the content is changed, and indicates that #13010 is loaded with the sum of a variable #100 and 0.5. If G900 is discriminated in the block analysis, an analysis of the program is suspended. "(CHANGE VALUE=D10)" is a help text for the change of the value of D10.

FIG. 7 shows a machining program example for the case where a code that discriminates a suspension of the block analysis is used as the code for the macro variable operation. The block analysis is suspended when a code for the macro variable operation of N14 is discriminated by the block analysis. When the execution of a block N13 is completed, the analysis is resumed from the block N14 for which the analysis is suspended, and the look-ahead is also resumed.

## Claims

1. A numerical controller comprising means adapted to carry out numerical control by performing a look-ahead process involving successively reading and analyzing blocks of a machining program to obtain execution data and stores the execution data in a buffer in advance, and performing execution of the stored execution data, said numerical controller is **characterised in that** it comprises :
code determining means that determines whether or not a read block contains a suspend code to suspend analyzing of the read block so that the look-ahead is stopped;
suspending means that suspends analyzing of the read block which is determined to contain the suspend code by said code determining means;
execution completion determining means that determines whether or not execution of the stored execution data of a block immediately preceding the suspended block is completed; and
resuming means that resumes the analyzing of the suspended block when the execution of the stored execution data of the immediately preceding block is determined to be completed by said execution completion determining means.

2. A numerical controller according to claim 1, further comprising means for registering the suspend code to stop the look-ahead using a parameter.

3. A numerical controller comprising means adapted to carry out numerical control by performing a look-ahead process involving successively reading and analyzing blocks of a machining program to obtain execution data and storing the execution data in a buffer in advance, and performing execution of the stored execution data, said numerical controller is **characterised in that** it comprises :
code determining means that determines whether or not a read block contains a code of a macro variable operation for which analyzing of the read block is to be suspended so that the look-ahead is stopped;
suspending means that suspends analyzing of the read block which is determined to contain the code of the macro variable operation for which the analyzing of the read block is to be suspended by said code determining means;
execution completion determining means that determines whether or not execution of the stored execution data of a block immediately preceding the suspended block is completed; and
resuming means that resumes the analyzing of the suspended block when the execution of the stored execution data of the immediately preceding block is determined to be completed by said execution completion determining means.

4. A numerical controller according to claim 3, further comprising means for designating a range of macro variables for determination of the code of the macro variable operation for which analyzing of the read block is to be suspended, using a parameter.

5. A numerical controller according to claim 3, further comprising means for designating a stage of the macro variable operation for which analyzing of the read block is to be suspended, using a parameter.

6. A numerical controller comprising means adapted to carry out numerical control by performing a look-ahead process involving successively reading and analysing blocks of a machining program to obtain execution data and storing the execution data in a buffer in advance, and performing execution of the stored execution data, said numerical controller is **characterised in that** it comprises :
code determining means that determines whether or not a read block contains a look-ahead stop code to stop the look-ahead;
code type determining means that determines whether or not the look-ahead stop code determined by said code determining means is a code to suspend analyzing of the read block;
execution completion determining means that determines whether or not execution of the stored execution data of a block immediately preceding the suspended block is completed; and
suspending/continuing means that suspends analyzing of the read block containing the code to suspend analyzing of the read block and resumes the analyzing of the suspended block to obtain the execution data, or alternatively continues the analyzing of the read block to obtain the execution data, in accordance with results of the determination by said code type discrimination means and the determination of said execution completion determining means.

7. A numerical controller according to claim 6, further comprising means for registering one or more look-ahead stop codes using one or more parameters.

## Patentansprüche

1. Numerische Steuerung, umfassend Mittel, ausgelegt zur Durchführung einer numerischen Steuerung durch Ausführen eines Vorausschauverfahrens, welches das nacheinander Lesen und Analysieren von Blöcken eines Bearbeitungsprogramms zum Erhalten von Umsetzungsdaten beinhaltet, und welches die Umsetzungsdaten im Voraus in einem Puffer ablegt, und Ausführen der Umsetzung der abgelegten Umsetzungsdaten, wobei die numerische Steuerung **dadurch gekennzeichnet ist, dass** sie umfasst
Codefeststellmittel, welches feststellt, ob ein gelesener Block einen Aussetzungscode enthält oder nicht, zum Aussetzen des Analysierens des gelesenen Blocks, so dass die Vorausschau angehalten wird;
Aussetzmittel, welches das Analysieren des gelesenen Blocks aussetzt, von welchem durch das Codefeststellmittel festgestellt wird, dass er den Aussetzcode enthält;
Umsetzabschlussfeststellmittel, welches feststellt, ob die Umsetzung der abgelegten Umsetzungsdaten eines Blocks, der dem ausgesetzten Block unmittelbar vorausgeht, abgeschlossen ist; und
Wiederaufnahmemittel, welches das Analysieren des ausgesetzten Blocks wieder aufnimmt, wenn vom Umsetzabschlussfeststellmittel festgestellt wird, dass die Umsetzung der abgelegten Umsetzungsdaten des unmittelbar vorausgehenden Blocks abgeschlossen ist.

2. Numerische Steuerung gemäß Anspruch 1, zudem umfassend Mittel zum Registrieren des Aussetzcodes, um die Vorausschau mittels eines Parameters anzuhalten.

3. Numerische Steuerung, umfassend Mittel, ausgelegt zur Durchführung einer numerischen Steuerung durch Ausführen eines Vorausschauverfahrens, welches das nacheinander Lesen und Analysieren von Blöcken eines Bearbeitungsprogramms zum Erhalten von Umsetzungsdaten beinhaltet, und welches die Umsetzungsdaten im Voraus in einem Puffer ablegt, und Ausführen der Umsetzung der abgelegten Umsetzungsdaten, wobei die numerische Steuerung **dadurch gekennzeichnet ist, dass** sie umfasst
Codefeststellmittel, welches feststellt, ob ein gelesener Block einen Code einer Makrovariablen-Operation enthält oder nicht, für welche das Analysieren des gelesenen Blocks ausgesetzt werden soll, so dass die Vorausschau angehalten wird;
Aussetzmittel, welches das Analysieren des gelesenen Blocks aussetzt, von welchem durch das Codefeststellmittel festgestellt wird, dass er den Code der Makrovariablen-Operation enthält, für welche das Analysieren des gelesenen Blocks ausgesetzt werden soll;
Umsetzabschlussfeststellmittel, welches feststellt, ob die Umsetzung der abgelegten Umsetzungsdaten eines Blocks, der dem ausgesetzten Block unmittelbar vorausgeht, abgeschlossen ist; und
Wiederaufnahmemittel, welches das Analysieren des ausgesetzten Blocks wieder aufnimmt, wenn vom Umsetzabschlussfeststellmittel festgestellt wird, dass die Umsetzung der abgelegten Umsetzungsdaten des unmittelbar vorausgehenden Blocks abgeschlossen ist.

4. Numerische Steuerung gemäß Anspruch 3, zudem umfassend Mittel zum Bestimmen eines Bereichs von Makrovariablen zum Bestimmen des Codes der Makrovariablen-Operation, für welche das Analysieren des gelesenen Blocks ausgesetzt werden soll, mittels eines Parameters.

5. Numerische Steuerung gemäß Anspruch 3, zudem umfassend Mittel zum Bestimmen eines Bereichs der Makrovariablen-Operation, für welche Analysieren des gelesenen Blocks ausgesetzt werden soll, mittels eines Parameters.

6. Numerische Steuerung, umfassend Mittel, ausgelegt zur Durchführung einer numerischen Steuerung durch Ausführen eines Vorausschauverfahrens, welches das nacheinander Lesen und Analysieren von Blöcken eines Bearbeitungsprogramms zum Erhalten von Umsetzungsdaten und Ablegen der Umsetzungsdaten im Voraus in einem Puffer beinhaltet, sowie Ausführen der Umsetzung der abgelegten Umsetzungsdaten, wobei die numerische Steuerung **dadurch gekennzeichnet ist, dass** sie umfasst
Codefeststellmittel, welches feststellt, ob ein gelesener Block einen Vorausschau-Anhaltecode enthält oder nicht, um die Vorausschau anzuhalten;
Codeartfeststellmittel, welches feststellt, ob der festgestellte Vorausschau-Anhaltecode ein Code ist zum Aussetzen des Analysierens des gelesenen Blocks, oder nicht;
Umsetzabschlussfeststellmittel, welches feststellt, ob die Umsetzung der abgelegten Umsetzungsdaten eines Blocks, der dem ausgesetzten Block unmittelbar vorausgeht, abgeschlossen ist; und
Aussetz-/Weitermachmittel, welches das Analysieren des gelesenen Blocks mit dem Code zum Aussetzen des Analysierens des gelesenen Blocks aussetzt, und das Analysieren des ausgesetzten Blocks wieder aufnimmt, um die Umsetzungsdaten zu erhalten, oder wahlweise mit dem Analysieren des gelesenen Blocks weiter macht, um die Umsetzungsdaten zu erhalten, gemäß Ergebnissen der Feststellung durch das Codeartunterscheidungsmittel und der Feststellung des Umsetzabschlussfeststellmittels.

7. Numerische Steuerung gemäß Anspruch 6, zudem umfassend Mittel zum Registrieren des Aussetzcodes, um die Vorausschau mittels eines Parameters zu unterbrechen.

## Revendications

1. Un système de commande numérique comprenant un moyen adapté de façon à effectuer une commande numérique par l'exécution d'un processus d'anticipation impliquant successivement la lecture et l'analyse de blocs d'un programme d'usinage de façon à obtenir des données d'exécution et à mettre en mémoire les données d'exécution dans une mémoire tampon à l'avance, et la réalisation de l'exécution des données d'exécution conservées en mémoire, ledit système de commande numérique étant **caractérisé en ce qu'**il comprend :
un moyen de détermination de code qui détermine si ou non un bloc lu contient un code de suspension destiné à suspendre l'analyse du bloc lu de sorte que l'anticipation soit arrêtée,
un moyen de suspension qui suspend l'analyse du bloc lu qui est déterminé contenir le code de suspension par ledit moyen de détermination de code,
un moyen de détermination d'achèvement d'exécution qui détermine si ou non l'exécution des données d'exécution conservées en mémoire d'un bloc précédent immédiatement le bloc suspendu est achevée, et
un moyen de reprise qui reprend l'analyse du bloc suspendu lorsque l'exécution des données d'exécution conservées en mémoire du bloc immédiatement précédent est déterminée comme étant achevée par ledit moyen de détermination d'achèvement d'exécution.

2. Un système de commande numérique selon la revendication 1, comprenant en outre un moyen d'enregistrement du code de suspension de façon à arrêter l'anticipation au moyen d'un paramètre.

3. Un système de commande numérique comprenant un moyen adapté de façon à effectuer une commande numérique par l'exécution d'un processus d'anticipation impliquant successivement la lecture et l'analyse de blocs d'un programme d'usinage de façon à obtenir des données d'exécution et à conserver en mémoire les données d'exécution dans une mémoire tampon à l'avance, et la réalisation de l'exécution des données d'exécution conservées en mémoire, ledit système de commande numérique étant **caractérisé en ce qu'**il comprend :
un moyen de détermination de code qui détermine si ou non un bloc lu contient un code d'une opération de macro variable pour laquelle l'analyse du bloc lu doit être suspendue de sorte que l'anticipation soit arrêtée,
un moyen de suspension qui suspend l'analyse du bloc lu qui est déterminé contenir le code de l'opération de macro variable pour laquelle l'analyse du bloc lu doit être suspendue par ledit moyen de détermination de code,
un moyen de détermination d'achèvement d'exécution qui détermine si ou non l'exécution des données d'exécution conservées en mémoire d'un bloc précédent immédiatement le bloc suspendu est achevée, et
un moyen de reprise qui reprend l'analyse du bloc suspendu lorsque l'exécution des données d'exécution conservées en mémoire du bloc immédiatement précédent est déterminée comme étant achevée par ledit moyen de détermination d'achèvement d'exécution.

4. Un système de commande numérique selon la revendication 3, comprenant en outre un moyen de désignation d'une plage de macro variables pour la détermination du code de l'opération de macro variable pour laquelle l'analyse du bloc lu doit être suspendue, au moyen d'un paramètre.

5. Un système de commande numérique selon la revendication 3, comprenant en outre un moyen de désignation d'une étape de l'opération de macro variable pour laquelle l'analyse du bloc lu doit être suspendue, au moyen d'un paramètre.

6. Un système de commande numérique comprenant un moyen adapté de façon à effectuer une commande numérique par l'exécution d'un processus d'anticipation impliquant successivement la lecture et l'analyse de blocs d'un programme d'usinage de façon à obtenir des données d'exécution et à conserver en mémoire les données d'exécution dans une mémoire tampon à l'avance, et la réalisation de l'exécution des données d'exécution conservées en mémoire, ledit système de commande numérique étant **caractérisé en ce qu'**il comprend :
un moyen de détermination de code qui détermine si ou non un bloc lu contient un code d'arrêt d'anticipation de façon à arrêter l'anticipation,
un moyen de détermination de type de code qui détermine si ou non le code d'arrêt d'anticipation déterminé par ledit moyen de détermination de code est un code destiné à suspendre l'analyse du bloc lu,
un moyen de détermination d'achèvement d'exécution qui détermine si ou non l'exécution des données d'exécution conservées en mémoire d'un bloc précédent immédiatement le bloc suspendu est achevée, et
un moyen de suspension/poursuite qui suspend l'analyse du bloc lu contenant le code destiné à suspendre l'analyse du bloc lu et reprend l'analyse du bloc suspendu de façon à obtenir les données d'exécution, ou sinon poursuit l'analyse du bloc lu de façon à obtenir les données d'exécution, en fonction des résultats de la détermination par ledit moyen de discrimination de type de code et de la détermination dudit moyen de détermination d'achèvement d'exécution.

7. Un système de commande numérique selon la revendication 6, comprenant en outre un moyen d'enregistrement d'un ou plusieurs codes d'arrêt d'anticipation au moyen d'un ou plusieurs paramètres.
